# EUROPEAN PATENT SPECIFICATION

(11) **EP 1 905 115 B1**
(45) Date of publication and mention of the grant of the patent: **28.07.2010**
(21) Application number: 06754494.0
(22) Date of filing: 22.06.2006
(51) Int. Cl.: H01M 8/04, H01M 8/06, B01D 39/16

(54) **FILTER ARRANGEMENT FOR FUEL CELL**
FILTERANORDNUNG FÜR EINE BRENNSTOFFZELLE
DISPOSITIF FILTRANT POUR PILE À COMBUSTIBLE

(30) Priority: 01.07.2005 DE 102005031182; 14.10.2005 US 726777 P
(43) Date of publication of application: 02.04.2008
(73) Proprietor: Carl Freudenberg KG, 69469 Weinheim (DE)
(72) Inventor: LEISTER, Klaus, 69469 Weinheim (DE); HÜCKER, Verena, 69469 Weinheim (DE); HINTENLANG, Dieter, 69518 Absteinach (DE)
(86) International application number: PCT/EP2006/005998
(87) International publication number: WO 2007/003274

(56) References cited:
- EP-A1- 1 402 933
- WO-A-2004/006374
- US-A1- 2001 042 361
- US-A1- 2002 119 357

## Description

### Technical field

The invention relates to an arrangement for the conveying of fuel cell gases.

### Prior art

Such an arrangement is known from DE 102 30 283 A1. The arrangement shown there is suitable for removing particles, on the one hand, and other constituents such as noxious gases and aerosols, on the other hand, from the supply air. The particles are separated out in the first filter layer, whilst the second filter layer is equipped for removing aerosols. For this purpose, it is proposed to design the second filter layer as an electrostatic filter with ionisation. Electromagnetic filter methods are especially suitable for filtering salt-containing aerosols. With an electrostatic filter, there is the drawback that auxiliary energy is required to build up an electromagnetic field for the operation.

### Description of the invention

The problem underlying the invention is to make available an arrangement which is suitable, without additional auxiliary energy, for the filtering of aerosols, in particular salt-containing will aerosols, which can easily be replaced, and which further filters emissions originating from a gas conveying device.

This problem is solved with the features of claim 1. The sub-claims relate to advantageous developments.

The solution to the problem is an arrangement for the conveying of fuel cell gases, which comprises at least a first filter arrangement, whereby a gas conveying device and at least one further filter arrangement are assigned to the first filter arrangement. Particles and liquid aerosols are retained in the filter arrangement according to the invention upstream of the gas conveying device. Further constituents are retained by the further filter arrangement. These can be noxious gases from the surroundings, but also liquid, gaseous or particulate constituents of the gas conveying device. Typical emissions of a gas conveying device are for example lubricating or hydraulic oils as well as softening agents, parting agents and particulate constituents caused by wear. These are retained by the further filter arrangement and protect the downstream fuel cell against damage due to these constituents.

The further filter arrangement comprises a chemical filter. By means of the chemical filter, noxious gases that can cause damage to the downstream fuel cell can be removed from the supply air or the gas conveying device.

The second filter layer comprises an electret filter material. Various polymer fibres are mixed together and rigidified by needles in order to produce electret filter material. As a result of intense friction, the fibres, which exhibit different electro-negativities, are charged electrostatically to a varying extent and thus become electrostatically filter-effective. The second filter layer is thus formed by a mixture of positively and negatively charged individual fibres. The polymer fibres can also be rigidified thermally or by a water jet process. The electrostatic charging can then take place by means of a plasma treatment. Filter material that comprises electrostatically charged fibres is generally referred to as electret filter material. It is particularly advantageous that fine particles can be filtered with electret filter material with a low pressure loss. On account of the electrostatic interaction, the pores can be designed, with identical filtering efficiency, larger than in the case of a non-charged filter material. Electret filter material is electrostatically filter-effective without the supply of auxiliary energy.

Such filter media can be arranged by simple means in the supply air stream and can easily be replaced. Electret filter material exhibits a good useful life and is low-cost. In the case of the filter arrangement according to the invention, the first filter layer designed as a coarse filter is arranged upstream of the second filter layer designed as a fine filter. As a result, coarser particles are first separated out in the first filter layer. The separation of.fine particles by means of the electrostatic equipping takes place in the second filter layer, especially the separation of salt-containing aerosols. Aerosols are understood in this connection to mean solid or liquid particles which are present in a gas phase. The filter arrangement is particularly compact.

The first filter layer and/or the second filter layer can be made from a nonwoven fabric. Nonwoven fabrics are low-cost and easy to produce and can be adapted to various requirements by the selection of material, fibre diameters and weights per unit area. The nonwoven fabric is preferably made from a plastic, for example polyester, a polyolefin and/or polyacryl nitrate. Nonwoven fabrics can be endowed with different properties by means of different production methods, for example suitability for the filtration of particles of different size and the filtration of certain chemical constituents. The nonwoven fabric can be equipped for example with ion exchangers, in order to be able to filter, depending on the nature, basic or acid gases, for example NH₃ or SO₂.

The filter layers can be joined together in a firmly bonded manner. The filter layers are thus rigidly joined together, whereby the joined filter layers can be particularly easily assembled and replaced. In other embodiments, the filter layers can also be joined together in a keyed and/or friction-locked manner. As a result of the joining of the two filter layers, the inherent stiffness of the filter arrangement is also increased. An additional support mesh is not necessary, since on the one hand the inherent stiffness is increased by the joining and on the other hand the pressure loss of the filter arrangement is low due to the use of an electret filter material. In order to increase the inherent stiffness further, the filter layers can be embedded in a frame made from a plastic injection moulding.

The filter layers can be welded together. They can be joined together at low cost and without additional auxiliary materials, for example by ultrasound welding.

The filter layers can be designed as stampings. Stampings can be produced in a straightforward manner and in a wide diversity of shapes.

The filter layers can be joined together in a firmly bonded manner along the edges. The firmly bonded joining, in particular welding, of the edges can take place in one step with the stamping. The largest possible filter area is thereby achieved.

The further filter arrangement can comprise an activated carbon layer. Depending on the equipment, the activated carbon forms an adsorption filter and/or an absorption filter. An activated carbon is suitable for the filtration of various chemicals constituents as well as particles. Other sorbent agents can also be provided in the further filter arrangement. The latter can act through physisorption or chemisorption. Impregnated carbons, silicon dioxides, aluminium silicates, aluminium oxides or ion exchangers, for example, are conceivable. The further filter arrangement can additionally comprise upstream and/or downstream particle filters. Against this background, it is also conceivable for the activated carbon layer to comprise activated carbon fibres and/or activated carbon granulate.

The use of the arrangement in a fuel cell is advantageous in a mobile device. The use in a mobile device and here, in particular, a maritime device or one close to the sea, is particularly advantageous, since the arrangement on the one hand does not require any auxiliary energy and on the other hand is particularly compact. The arrangement can be providing flexibly in compact fuel cell units.

Furthermore, the arrangement is equipped for the filtration of the salt-containing and particle-loaded supply air. The arrangement can be designed compact and easily replaceable. Against this background, an application in stationary installations is also conceivable. Fixed property, for example, is subject, depending on the location, to a heavy aerosol pollution. The described arrangements can be effectively used to counter this.

### Brief description of the drawing

Several examples of embodiment are explained below in greater detail with the aid of the figures. In the figures,
- Fig. 1: shows diagrammatically a filter arrangement and
- Fig. 2: shows diagrammatically an arrangement in a mobile device according to the invention

### Embodiment of the invention

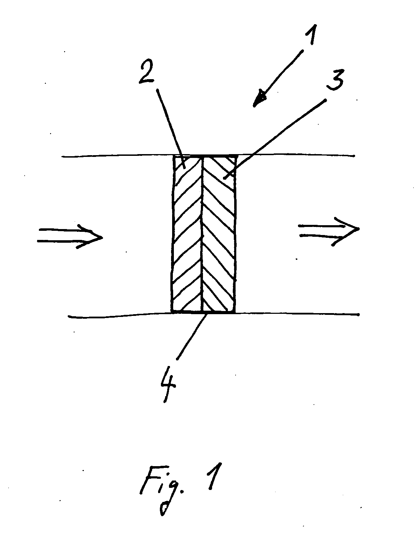

Figure 1 shows a filter arrangement 1 for cleaning fuel cell supply air. Filter arrangement 1 is arranged in supply air stream 9 of a fuel cell 8. Filter arrangement 1 comprises two filter layers 2, 3 made from nonwoven fabric. First filter layer 2 is made from a polyolefin nonwoven fabric and is designed as a coarse filter for the filtration of coarse particles. Second filter layer 3 is made from an electret filter material and is designed as a fine filter for the filtration of finer particles, in particular salt-containing aerosols. The electret filter material is formed by a mixture of polypropylene and polyacryl nitrile fibres and has a supporting nonwoven fabric of polyester. The two filter layers 2, 3 are designed flat. In other embodiments, filter layers 2, 3, in particular first filter layer 2, can also be designed as folded filters. The formation of the two filter layers 2, 3 takes place by stamping, whereby in this embodiment edges 4 of filter layers 2, 3 are welded during the stamping and are thus joined in a firmly bonded manner. Filter layers 2, 3 can also be joined by ultrasound welding. The thickness of the assembled filter arrangement 1 amounts in this embodiment to less than 15 mm and is thus particularly compact.

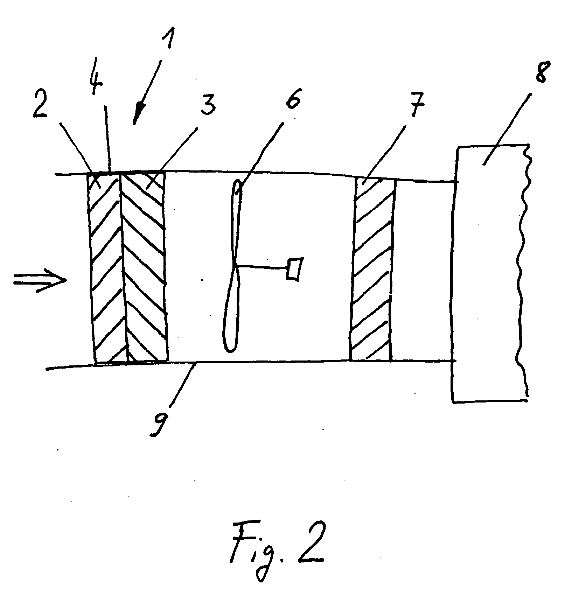

Figure 2 shows an arrangement 5 according to the invention for conveying fuel cell gases. The arrangement comprises a filter arrangement 1, a gas conveying device 6 downstream of filter arrangement 1 and a further filter arrangement 7 downstream of gas conveying device 6. Filter arrangement 1 comprises in each case two filter layers 2, 3 made from nonwoven fabric. First filter layer 2 is made from a polyolefin nonwoven fabric and is designed as a coarse filter for the filtration of coarser particles. Second filter 3 is made from an electret filter material and is designed as a fine filter for the filtration of finer particles, in particular salt-containing aerosols. Gas conveying device 6 is constituted as a membrane pump in this embodiment. Further filter arrangement 7 comprises a chemical filter which is formed by an activated carbon layer. Emissions from gas conveying device 6 as well as further noxious gases are retained by further filter arrangement 7. Furthermore, emissions of other constituents, e.g. softening agents from plastics, which can lead to premature wear of fuel cell 8, can also be filtered. Arrangement 5 is arranged in a supply air line 9 of a fuel cell 8. Fuel cell 8 is assembled in a mobile device, in this embodiment is a watercraft, for example a sailing ship.

## Claims

1. An arrangement (5) for conveying fuel cell gases, comprising at least a first filter arrangement (1) for cleaning fuel cell supply air, comprising at least two filter layers (2, 3), whereby a first filter layer (2) is designed as a coarse filter and a second filter layer (3) as a fine filter, whereby the second filter layer (3) comprises an electret filter material whereby a gas conveying device (6) and at least one further filter arrangement (7) are assigned to the first filter arrangement (1), whereby that there is arranged downstream of the first filter arrangement (1), in the gas flow direction, a gas conveying device (6), which is followed by at least one further filter arrangement (7), **characterized in that** the further filter arrangement (7) comprises a chemical filter.

2. The arrangement according to claim 1, **characterised in that** the further filter arrangement (7) comprises an activated carbon layer.

3. The arrangement according to claim 1, **characterised in that** the first filter layer (2) and/or the second filter layer (3) are made from a nonwoven fabric.

4. The arrangement according to claim 1 or 2, **characterised in that** the filter layers (2, 3) are joined together in a firmly bonded manner.

5. The arrangement according to any one of claims 1 to 3, **characterised in that** the filter layers (2, 3) are welded together.

6. The arrangement according to any one of claims 1 to 4, **characterised in that** the filter layers (2, 3) are formed as stampings.

7. The arrangement according to claim 5, **characterised in that** the filter layers (2, 3) are joined together in a firmly bonded manner along the edges (4).

## Patentansprüche

1. Anordnung (5) zur Förderung von Brennstoffzellen-Gasen, umfassend zumindest eine erste Filteranordnung (1) zum Reinigen einer Brennstoffzellen-Zuluft, umfassend mindestens zwei Filterlagen (2, 3), wobei eine erste Filterlage (2) als Grobfilter und eine zweite Filterlage (3) als Feinfilter ausgebildet ist, wobei die zweite Filterlage (3) ein Elektretfiltermaterial umfasst, wobei der ersten Filteranordnung (1) eine Gasfördereinrichtung (6) und mindestens eine weitere Filteranordnung (7) zugeordnet sind, wobei der ersten Filteranordnung (1) in Gasströmungsrichtung eine Gasfördereinrichtung (6) nachgeordnet ist, an welche sich mindestens eine weitere Filteranordnung (7) anschließt, **dadurch gekennzeichnet, dass** die weitere Filteranordnung (7) einen chemischen Filter umfasst.

2. Anordnung nach Anspruch 1, **dadurch gekennzeichnet, dass** die weitere Filteranordnung (7) eine Aktivkohleschicht umfasst.

3. Anordnung nach Anspruch 1, **dadurch gekennzeichnet, dass** die erste Filterlage (2) und/oder die zweite Filterlage (3) aus einem Vliesstoff gebildet sind.

4. Anordnung nach Anspruch 1 oder 2, **dadurch gekennzeichnet, dass** die Filterlagen (2, 3) fest miteinander verbunden sind.

5. Filteranordnung nach einem der Ansprüche 1 bis 3, **dadurch gekennzeichnet, dass** die Filterlagen (2, 3) miteinander verschweißt sind.

6. Anordnung nach einem der Ansprüche 1 bis 4, **dadurch gekennzeichnet, dass** die Filterlagen (2, 3) als Stanzlinge ausgebildet sind.

7. Anordnung nach Anspruch 5, **dadurch gekennzeichnet, dass** die Filterlagen (2, 3) entlang der Kanten (4) fest miteinander verbunden sind.

## Revendications

1. Ensemble (5) de transport de gaz de cellule à combustible, comprenant
au moins un premier ensemble de filtre (1) qui épure l'air alimentant la cellule en combustible et qui comprend au moins deux couches de filtration (2, 3),
une première couche de filtration (2) étant conçue comme filtre grossier et une deuxième couche de filtration (3) comme filtre fin,
la deuxième couche de filtration (3) comprenant un matériau de filtration à électret,
un dispositif (6) de transport de gaz et au moins un autre ensemble de filtre (7) étant attribués au premier ensemble de filtre (1),
un dispositif (6) de transport de gaz suivi par au moins un autre ensemble (7) de filtre étant agencé en aval du premier ensemble de filtre (1) dans la direction d'écoulement du gaz,
**caractérisé en ce que**
l'autre ensemble (7) de filtre comprend un filtre chimique.

2. Ensemble selon la revendication 1, **caractérisé en ce que** l'autre ensemble de filtre (7) comprend une couche de charbon actif.

3. Ensemble selon la revendication 1, **caractérisé en ce que** la première couche de filtration (2) et/ou la deuxième couche de filtration (3) sont réalisées en un tissu non tissé.

4. Ensemble selon les revendications 1 ou 2, **caractérisé en ce que** les couches de filtration (2, 3) sont reliées ensemble de manière à être associées fermement.

5. Ensemble selon l'une quelconque des revendications 1 à 3, **caractérisé en ce que** les couches de filtration (2, 3) sont soudées l'une à l'autre.

6. Ensemble selon l'une quelconque des revendications 1 à 4, **caractérisé en ce que** les couches de filtration (2, 3) sont des produits estampés.

7. Ensemble selon la revendication 5, **caractérisé en ce que** les couches de filtration (2, 3) sont reliées ensemble de manière à être associées fermement le long de leurs bords (4).
